# EUROPEAN PATENT SPECIFICATION

(11) **EP 2 022 152 B1**
(45) Date of publication and mention of the grant of the patent: **01.08.2012**
(21) Application number: 07725533.9
(22) Date of filing: 24.05.2007
(51) Int. Cl.: H02G 15/18

(54) **SUPPORT COIL WITH MECHANICAL LOCKING DEVICE AND METHOD FOR ITS MANUFACTURE**
STÜTZWENDEL MIT MECHANISCHER VERRIEGELUNGSVORRICHTUNG UND VERWENDUNGSVERFAHREN DAFÜR
ROULEAU DE SUPPORT AVEC DISPOSITIF DE VERROUILLAGE MÉCANIQUE ET SON PROCÉDÉ DE FABRICATION

(30) Priority: 24.05.2006 DE 102006024840; 19.04.2007 DE 102007018915
(43) Date of publication of application: 11.02.2009
(73) Proprietor: Tyco Electronics Raychem GmbH, 85521 Ottobrunn (DE)
(72) Inventor: SIMONSOHN, Thilo, 81735 München (DE)
(74) Representative: Grünecker, Kinkeldey, Stockmair & Schwanhäusser
(86) International application number: PCT/EP2007/004636
(87) International publication number: WO 2007/134872

(56) References cited:
- EP-A1- 0 619 636
- EP-A1- 0 735 639
- EP-A2- 0 291 203
- DE-C1- 19 820 634
- US-A- 4 503 105
- US-A- 5 670 223

## Description

The invention relates to a support coil for the radial support of resiliently expanded tubing material.

These types of support coil are known in the art and are used to maintain tubing material, for example, insulating tubes and socket members in an expanded state before final assembly. The insulating tubes and socket members are used for the electrical insulation or sealing of electrical components in the energy industry, such as cable couplings or cable connectors, for example. Because high voltages of over 100 kV, for example, can be applied to these components, the insulating tubes are developed with thick walls and manufactured from materials that insulate well, such as silicone, for example. Such tubing materials, so-called cold shrink tubing, should resiliently match the outer contours of the component to be insulated and enclose it with no gaps if possible. Therefore, the tubing material is expanded resiliently up to 4 times its diameter before assembly. The electrical and other components can therefore easily be inserted into the tubing material.

In order to keep the tubing material in its expanded state until it is assembled, a supporting body in the form of the above-mentioned support coil is inserted into the tubing material, which absorbs the restoring force of the tubing material that is present due to the resilient expansion. To assemble, the component that is to be enclosed is positioned inside the support coil, which has a hollow interior. Then the support coil must be removed from the tubing material so that the tubing material can shrink around the component.

In order to be able to remove the support coil, which is tightly enclosed by the tubing material, upon which pressing forces of up to 10 bar, for example, can be applied, manually from the tubing material, support coils of the above-mentioned type have proved themselves. This type of support coil can be dismantled in stages in a longitudinal direction by unwinding the extruded profile body, in that the unwound extruded profile body pulled out by the hollow support coil. When the support coil is dismantled in stages in this way the tubing material shrinks around the component to be insulated by itself. In this way, the support coil can be removed manually from the tubing material without further tools or devices.

Consequently, the support coil of the stated type must on one hand be able constantly to withstand high pressure emanating from the expanded tuning material and on the other be manually removable from the tubing material by pulling the extruded profile body out. Furthermore, it is important for the support coil that there is enough overall space available inside the interior of the support coil, due to a wall thickness that is as thin as possible, to insert the component to be enclosed.

In order to fulfil these requirements, the front faces of the wound extruded profile body are connected to each other and joined together in the known support coils in a material-uniting manner, for example, by welding or gluing. The front faces to be connected are also formed so that they link into each other.

Known support coils are described for example in US 5,087,492, EP 0 619 636 A1, WO 93/22816, WO 83/00779, DE 19820634 C1, EP 0399263 A2, US 5,670,223 and WO 96/24977.

The generic support coils, for example US 5,670,223, are based on the principle that the elements of the tongue and groove arrangement or the ratchet arrangement of the adjacent turns that are to be connected to each other are connected to each other frictionally, so that no substantial reduction of the interior space being kept free by the support coil can take place substantially through the resilient restoring force of the expanded tubing material that is being applied from the outside. This requirement, however, is in opposition to the endeavour of manually removing the extruded profile body easily from the tubing material. Whilst for the first issue an intimate connection of adjacent turns is desirable, it is actually a hindrance to the second issue. Furthermore, variations in the dimensional accuracy, particularly of the tongue and groove or ratchet arrangements, lead to a non-uniform connection. The releasing forces needed for the manual unwinding of the extruded profile body can sometimes vary greatly due to these non-uniform connections, so that the separation of the connected front faces can be made more difficult or manually impossible when the support coil is being dismantled, or the tubular support coil can fail and break under the pressure of the resiliently expanded tubing material. On the other hand, the support coil must also reliably take up the high restoring forces of the expanded tubing material without this making the removal of the support coil more difficult or even impossible in the process.

It is therefore the object of the present invention to provide an improved support coil in comparison to the prior art, which is inexpensive to produce, reliably withstands the pressing forces being applied radially from outside and can easily be dismantled manually with low releasing force, and removed from the tubing material.

It is proposed to achieve this object of the present invention by improving the generic tubular support coil with a rotation prevention means according to the characterizing part of claim 1, through which adjacent turns are held secure against rotation.

The present invention is derived from the consideration that the substantial supporting and retaining forces are held by the tongue and groove connection or ratchet arrangement in the axial and radial directions. A rotation prevention means is, however, additionally provided, through which adjacent turns are held secure against rotation, so that the adjacent turns are prevented from slipping apart, which would eventually lead to a reduction in the diameter of the support coil.

Additional rotation prevention means can be formed by positive locking of adjacent turns. Irregularities can, for example, be provided in the process on the front faces of turns located next to each other, which claw or hook into each other, so that the adjacent turns are prevented from slipping apart. Alternatively, the outer circumferential surface of the support coil can also be profiled, i.e. have irregularities. The profiling of the outer circumferential surface combines with the resiliently expanded tubing material and claws into the inner circumferential surface of the same. A positive rotation prevention is also formed through this. These irregularities are - so far as they are formed on the front faces - preferably provided all over, at least where the two front faces come in contact with each other. The friction-increasing irregularities can be created during the manufacture of the extruded profile body, which is usually formed from plastics material, through forming and/or grinding processes. In the case of forming processing, the stamping of the irregularities by a knurling wheel onto the extruded profile body that is initially extruded as continuous material is, for example, preferred. The friction-increasing irregularities can just as well be created by the sand blasting of the front faces later when they are located next to each other in their joined state. The actual configuration of the irregularities on the outer circumferential surface and/or front faces is at the discretion of the expert. The expert will select suitable profiling, particularly on the basis of the properties of the resiliently expanded tubing material, which has a sufficiently positive locking effect for the formation of a rotation prevention means without damaging the resiliently expanded tubing material or even cutting through it. The tubing material to be resiliently laid onto the support coil is laid onto these irregularities on the outer circumferential surface. A corresponding mechanical clamping takes place between the tubing material and the support coil.

The friction-increasing irregularities on the front faces and also the friction-increasing irregularities on the outer circumferential surface of the wound extruded profile body have the effect of increased mechanical interleaving of the individual parts of the tubular support coil and the tubing material, so that the individual turns of the wound extruded profile body can no longer slip or slide relative to each other. A greater accuracy of the desired outer diameter of the support coil is ensured by the measures taken. The previously mentioned measures can be provided in combination with each other.

As regards a radial retaining force that is as great as possible, it is preferable to provide the irregularities provided on opposite end faces of adjacent turns radially outside the tongue and groove arrangement, preferably in the region of the outer edge of the support coil. In particular, the resistive torque against rotation of the individual turns of the wound extruded profile body against each other is increased by the arrangement of the irregularities on the radially outer edge of the support coil front face. The irregularities provided on the front faces should preferably be provided so as to correspond to each other so that, for example, troughs of the flutes provided on the front face of one turn engage with the crests of the flutes provided on the adjacent turn. The irregularities can be arranged on the circumference, distributed in portions. It is sufficient to provide the irregularities simply on one small angled portion of the outer circumference in order to create a rotation prevention means. It is, of course, up to the expert whether to provide a plurality of such regions distributed over the circumference or to distribute the irregularities over the whole front face.

A corresponding rotation prevention means provided on the end faces can also be combined with other rotation prevention means provided on the inner circumferential surface and/or the outer circumferential surface of the support coil if desired.

According to a preferred development of the present invention, it is proposed that the wound extruded profile body is provided with projections, extending substantially in an axial direction along it to form a rotation prevention means on the outer circumferential surface. These projections do not have to extend along the whole axial length of the support coil. The projections of adjacent turns, which extend axially, will instead usually be offset. The projections do, however, extend substantially in the axial direction, i.e. coaxial to the longitudinal axis of the support coil, for example, in the form of flutes, which can be configured as sharp-edged teeth or vanes.

According to the invention, the rotation prevention means is a component that extends over at least two usually adjacent turns. This component is described as supporting body hereinafter, as it supports two adjacent turns of the support coil against each other. The supporting body is a separate part, which can be formed, for example, by overlay welding, adhesive film or a wire or a blade or a piece of profile. The supporting body previously mentioned can be connected to the inner circumferential surface and/or the outer circumferential surface of the extruded profile body. Alternatively, the supporting body can also cut through the material of the coil, i.e. be accommodated in the axial direction of the extruded profile body in a hole formed corresponding to the supporting body. Fundamentally, it is not important how the connection is effected. It is just important that it is a removable connection, since the connection will be dismantled anyway during the manual unwinding. A process is intended here, in which particularly the supporting body is first removed and then the turns of the support coil are unwound.

The rotation prevention means will normally extend over the whole axial length of the support coil. Usually an embodiment is preferred, in which the rotation prevention means cooperates with each individual turn. It is, however, also possible simply to fix individual turns, which are not necessarily provided directly adjacent to each other, against each other to prevent rotation. A rotation prevention means can already be achieved through this fixing of individual turns, through which adjacent turns are held secure and prevented from rotating. Thus drop formations are feasible, for example, with which only the turns forming the front faces of the support coil are connected to each other and prevented from rotating, through which the chance of rotating is taken away from the turns located between them as well. A supporting body, which is relatively flexurally rigid, is usually used with this type of rotation prevention means.

A rod element particularly comes into question as a supporting body, and extends substantially in an axial direction and forces through at least two adjacent turns of the tubular supporting coil, preferably the whole tubular support coil. The rod element should be flexurally rigid, in order to prevent adjacent turns of the support coil from rotating. The supporting body is removably connected to the extruded profile body. Any type of connection, which is suitable for connecting the rod element temporarily and sufficiently tightly to the extruded profile body, is feasible. The rod element can, for example, be connected to the extruded profile body by welding. It must be ensured that the weld connection is carried out in the process so that it can preferably be loosened by manual gripping of the rod element and the rod element can be removed from the extruded profile body.

The metallic rod element can also be connected by welding to the extruded profile body. This is preferably formed from plastics material for this purpose. The connection between the rod element and the extruded profile body is created in this preferred development in that the rod element manufactured from a metal is heated and laid in a heated state against the plastics material on the interior of the extruded profile body. The plastics material melts there and seals the hot rod element in. When the rod element cools, the plastic material solidifies and fuses the rod element with the extruded profile body. In the case of an alternative embodiment the rod element has a cut edge, which is cut into the material forming the extruded profile body and is held in the groove thus formed. In the case of this embodiment, the rod element is held against the material forming the extruded profile body by the keying of the same and can be removed from the inner circumferential surface of the extruded profile body with relatively light pressure in a radially inward direction.

The rod element can be accommodated in a groove, which extends along the whole of the circumferential surface of the extruded profile body substantially in an axial direction. Such a groove can be formed after the manufacture of the extruded profile body by mechanical processing. The rod element can be held in this groove by gluing, welding or other connections. It is also possible to grout the rod element in the groove. The groove can be one that is formed in the inner circumferential surface or outer circumferential surface. A groove is, however, to be preferred, which is provided on the inner circumferential surface so that the opposite outer circumferential surface of the extruded profile body provides a smooth surface for the expanded tubing material to be laid upon.

The rod element inserted into the groove can also be stuck in the groove by a slight twisting of individual turns. During this procedure, the extruded profile body is first manufactured by winding up the turns. Then a groove is created by mechanical processing on the inner and/or outer circumferential surface of the extruded profile body. The rod element is inserted into this groove. After that, the extruded profile body is twisted slightly as a whole, so that the individual turns push against each other, through which action the rod element is stuck on the border between adjacent turns where a gap in the groove is visible. Alternatively, the groove can also be created during the manufacture of the extrusion from which the extruded profile body is made. This procedure is especially suitable for the mass production of extruded profile bodies with identical diameter. The groove is formed along the whole length by the coiling of the turns during the manufacture of the wound extruded profile body in an axial direction.

In another alternative configuration, the rotation prevention means comprises a band, which is arranged inside the support coil and is preferably connected to the inner circumferential surface of the same. The band could be an elongated component of plastics or woven material. This band can be connected to the inner circumferential surface of the extruded profile body by gluing, welding or other connection methods. This connection is, however, removable in the sense that the connection between the band and the associated coil is dismantled by pulling on the band. The band can be welded with all of the coils of the extruded profile body. With respect to an easy removal of the rotation prevention means formed by the band, it is preferably inserted into the support coil in the form of a loop and has one portion, which is connected to the extruded profile body, and one portion which extends substantially parallel to this and protrudes from the support coil. This portion is preferably free within the support coil, i.e. is not connected to the extruded profile body in the manner of a rotation prevention means, but rather is simply arranged inside the support coil by being placed there and can support itself accordingly against the inner circumferential surface, without being connected to it. This free portion can, however, just as well be fixed to the extruded profile body by gluing to a predetermined place. The portion protruding from the support coil preferably forms a handling portion projecting beyond the extruded profile body. The dimensions of this handling portion are designed so that an assembly operator can grip the band by the handling portion manually and pull it out of the support coil. The handling portion can have particular functional surfaces in the form of friction-increasing regions for this purpose and/or thickened regions, which enable a good grip of the handling portion. Configurations, which make manual gripping easier, are intended here in particular. Counter functional surfaces can, however, just as well be provided for hand-operated tools, which cooperate with them. Eyelets or holes are intended, for example, in which the functional surface of a hand tool can engage.

The removal of the band is simplified particularly in that the two ends of the band are provided on the same front end of the extruded profile body. This leads to a configuration in which an attachment portion of the band, which is connected to the inner circumferential surface of the extruded profile body, and which is preferably connected to all of the turns, is fed through from the said front face through the support coil and is bent round at 180° into a loop at the opposite end. The end projecting from the loop is fed through the coil as a free portion substantially parallel to the attachment portion and forms the handling portion at its free end projecting beyond the support coil. By pulling on the handling portion, the band is bent in the region of a connection between the attachment portion and the extruded profile body. This deformation and the traction lead to a removal of the connection, which can be a glued or welded connection.

According to an alternative configuration, the supporting body can be connected to the inner circumferential surface and/or outer circumferential surface of the wound extruded profile body by overlay welding. The supporting body can be formed by one single weld spot, which is provided on the phase boundary between adjacent turns and connects the turns to each other. For economic reasons, an overlay-welded strand will normally be formed on the circumferential surface, which bridges all of the turns of the wound extruded profile body. When the individual turns of the extruded profile body are unwound the overlay welded support coil is broken at each phase boundary of the turn to be unwound and thus dismantled.

A similar dismantling of the rotation prevention means is possible in the case of another preferred configuration of the same, which is formed by adhesive film. This adhesive film also extends substantially in an axial direction and bridges adjacent turns. The adhesive film is preferably provided on the inner circumferential surface of the wound extruded profile body, so that the adhesive film can be pulled off from the inside before the support coil is dismantled. The adhesive film preferably has a tear-off tag for this purpose, which sticks out at least on one front side of the tubular support coil and can easily be gripped by the user in order to remove the adhesive film.

The present invention is particularly suitable for a preferred configuration of the ratchet and tongue and groove arrangement, in which the tongue and groove arrangement is spatially separated from the ratchet arrangement. When the unwound extruded profile body is pulled out through the support coil, the extruded profile body, which is still wound up, is rotated in the process about a pivot point in an unwinding direction, at the moment when the connected front faces come apart from each other. This movement pulls the front faces on the radially outer end apart and pushes them against each other on the radially inner end, i.e. a parting line opens up. In the case of the support coil according to the invention, this movement can be executed particularly easily, since the tongue and groove arrangement is spatially separated from the ratchet arrangement, which locks in a longitudinal direction. The mechanical locking of the front faces by the tongue and groove arrangement and the ratchet arrangement thus makes an easy opening up of the parting line possible when the support coil is dismantled. The preferred development therefore leads to a great radial support effect and a low releasing force being necessary.

Furthermore, the ratchet arrangement can be located in a radial direction inside or about a pivot point, about which the extruded profile body turns when the front faces are separated by the removal of unwound extruded profile bodies from the support coil. This has the advantage that the ratchet arrangement is formed in a region, which is not pulled apart when the connected front faces are separated. The ratchet arrangement therefore does not work against the releasing movement. The ratchet arrangement can be located in particular in a radial direction inside the tubular support coil.

In an advantageous configuration, the extruded profile body can have at least one weakening region between the tongue and groove arrangement and ratchet arrangement, in which the extruded profile body is designed so it can be deformed resiliently or plastically. This has the advantage that the extruded profile body can be bent during the unwinding process of the support coil to separate the tongue and groove arrangement and the ratchet arrangement, which leads to a particularly low release force. The weakening region can be formed particularly between a tongue of the tongue and groove arrangement and a ratchet element of the ratchet arrangement. Furthermore, the weakening region can have the smallest radial thickness of the extruded profile body. The weakening region can, for example, be formed by a protruding shoulder, on which a ratchet element of the ratchet arrangement is formed, the radial thickness of the shoulder being less than that of the rest of the extruded profile body. This type of shoulder design represents a kind of film hinge, with which the ratchet element is pivotally configured.

In order to reduce the necessary release force for the unwinding of the extruded profile body, the ratchet arrangement can have a passing region free of ratchet elements opposite a ratchet recess, into which the ratchet element can be moved when the front faces are separated. This embodiment prevents the ratchet arrangement from bracing the extruded profile body against the dismantling direction, since the ratchet element is moved into the passing region with little resistance when the front faces are separated. A passing region with no tongues can also be formed in the groove in order to prevent jamming or bracing against the movement in the dismantling direction.

In order to design the construction of the extruded profile body according to the invention particularly simply and compactly, the ratchet arrangement and the tongue and groove arrangement can be integrated into each other in portions. The ratchet element can therefore form the groove in portions, or the tongue can form the ratchet recess in portions, for example. The ratchet element and the groove, or the ratchet recess and the tongue, are formed on the same side of the extruded profile body respectively in a longitudinal direction.

In an advantageous development, the tongue and groove arrangement can be formed in the cross-section of the extruded profile body and be substantially rectangular. This has the advantage that the rectangular cross-section has a relatively large radial support effect, so that the length of the tongue can be made relatively short in the longitudinal direction. This length can be further reduced if a plurality of tongues is constructed with corresponding grooves on the extruded profile body

Alternatively, the tongue and groove arrangement can be in tne form of an arc on the radially outer side, in cross-section of the extruded profile body, at least for a portion. This has the advantage that the contour of the tongue and groove arrangement supports the rotational movement of the extruded profile body when it is dismantled and therefore a particularly low release force is necessary. In particular, the arc can be constructed substantially as the arc of a circle about a pivot point, about which rotation is substantially carried out when the front faces are separated on removal of the unwound extruded profile body from the support coil.

To make sure the ratchet element is located securely in the ratchet recess, the ratchet arrangement can have at least one retaining element, which secures the location of the ratchet element in the ratchet recess. This retaining element can be formed from a resiliently deflectable locking device, for example, which engages in a counter locking device in the ratchet recess. Alternatively, the retaining element can be formed positively, for example, as a hook.

In an advantageous development, the extruded profile body can be formed as a closed hollow profile. This has the advantages that less material is needed than for a solid profile and that the extruded profile body is nevertheless stable. Alternatively, the extruded profile body can be manufactured from an open profile, in which recesses, in the form of further grooves, for example, are formed, which open inwards radially and save material.

The invention is described hereinafter by way of examples with reference to the attached drawings. The various characteristics can be combined independently of each other, as has already been illustrated above with the individual advantageous configurations.

In the drawings:
Fig. 1 shows a schematic view of an example of a support coil,
Fig. 2 shows a schematic sectional view of the detail A of Fig. 1;
Fig. 3 shows a schematic view of the extruded profile body of Figs. 1 and 2 in cross- section;
Fig. 4 shows a schematic view of a tubing arrangement with the support coil from Fig 1;
Fig. 5 shows a schematic, perspective, side view of a second example of a support coil;
Fig. 6 shows a perspective side view of a first embodiment of a support coil according to the invention;
Fig. 7 shows a second embodiment of the support coil according to the invention, in a corresponding to that according to Fig. 6;
Fig. 8 shows an enlarged view of the detail D drawn in Fig. 7;
Fig. 9 shows a third embodiment of the support coil according to the invention in the view shown in Figures 6 and 7;
Fig. 10 shows a perspective side view of a fourth embodiment of the support coil according to the invention;
Fig. 11 shows an enlarged view of the detail F drawn in Fig. 10;
Fig. 12 shows a perspective side view of a fifth embodiment of the support coil according to the invention;
Fig. 13 shows an enlarged longitudinal section through the embodiment shown in Fig. 12;
Fig. 14 shows a perspective side view of a sixth embodiment of the present invention and
Fig. 15 shows an enlarged view of the detail E drawn in Fig. 14.

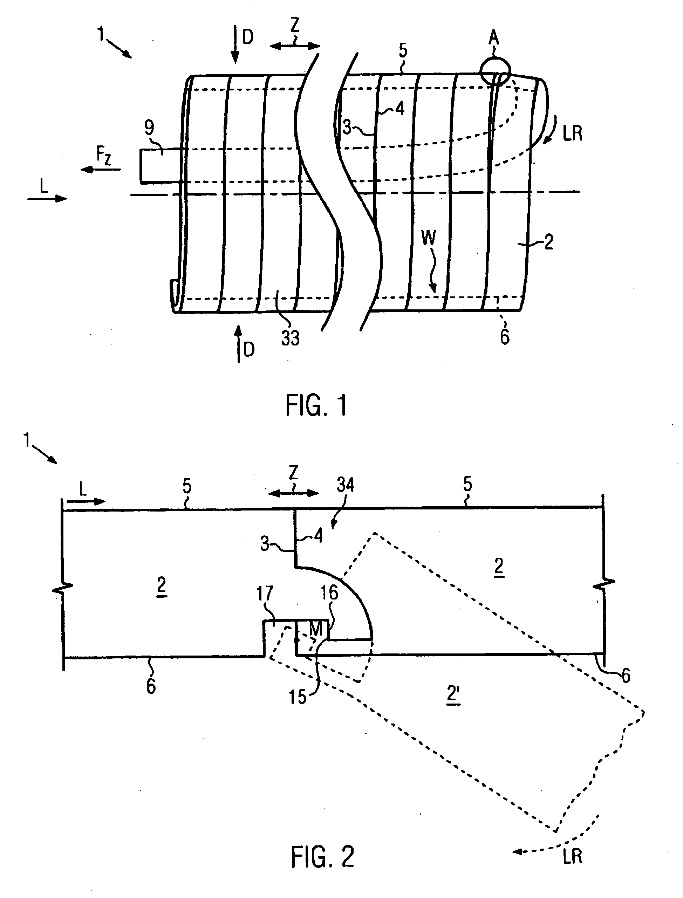

First, the general construction of a support coil 1 according to an example useful for understanding the invention is described with reference to Fig. 1.

The support coil 1 is formed by an extruded profile body 2 wound in a winding direction W to a plurality of turns 33. The extruded profile body 2 is formed as a substantially endless band, which is manufactured in an extrusion process, for example. In theory, support coils 1 of infinite length could be therefore manufactured. In practice, the support coils are generally about 30 to 50 cm long.

Front ends 3, 4 of the extruded profile body 2 are connected to each other in a longitudinal direction L of the support coil 1, which will be described hereinafter in more detail with reference to Figures 2 and 5 to 13. The radially outer external surface 5 and the radially inner internal surface 6 are formed substantially parallel to each other in cross section and form the substantially cylindrical outer circumferential surface and inner circumferential surface respectively of the tubular support coil 1. The support coil 1 in Fig. 1 by way of example has a substantially circular cross section and runs in the longitudinal direction L. The support coil 1 can, of course, be constructed with alternative cross sections, such as oval or square, for example. The extruded profile body 2 in Fig. 1 is manufactured from a flexible, solid material, e.g. a plastics material. The wound up support coil 1 can therefore withstand pressing forces D acting radially inwards.

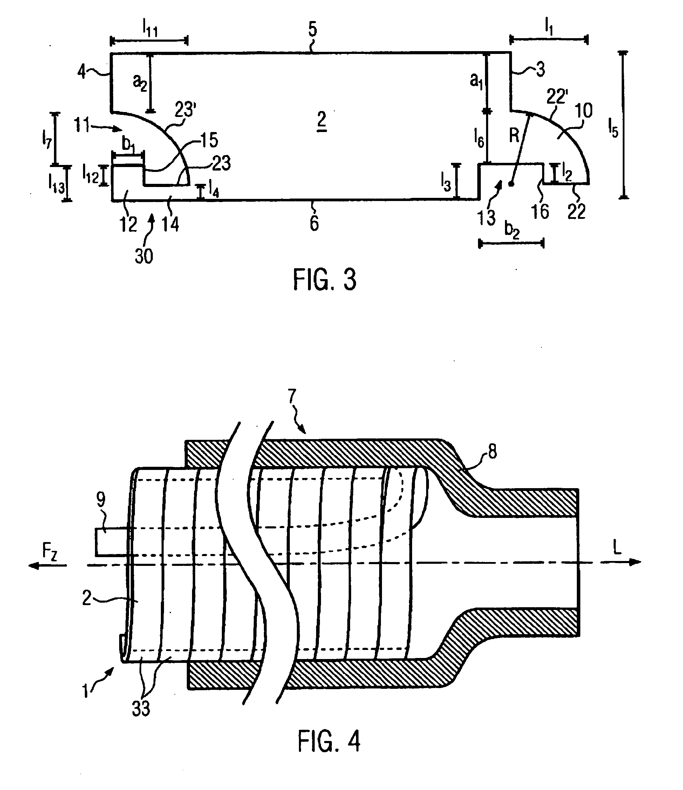

The more detailed configuration of the extruded profile body 2 and in particular the connection of the front ends 3, 4 in the longitudinal direction of the support coil 1 are now described in more detail with reference to Figs. 2 and 3.

The extruded profile body 2 shown in cross section in Fig. 3 comprises a tongue 10, a groove 11, a ratchet element 12 and a ratchet recess 13.

The tongue 10 formed on the front end 3 protrudes in the cross section of the extruded profile body 2 in the longitudinal direction L. The tongue 10 has a distance a₁ to the radially outer external surface 5. Between the external surface 5 and the tongue 10 the front face 3 runs substantially perpendicular to the external surface 5 and the internal surface 6. The tongue 10 has a retaining surface 22' located radially externally with a circular contour with a radius R about a central point M. This circular contour of the external retaining surface 22' runs in the embodiment shown by way of example in Fig. 3 as a quarter of a full circle, over 90°, so that the protruding length 1₁ of the tongue is the same as or similar to the radius R. The radially inner retaining surface 22 of the tongue 10 runs substantially in the longitudinal direction L, parallel to the external and internal surfaces 5, 6, with a step. This step is part of a substantially rectangular channel, which forms the ratchet recess 13.

The ratchet recess 13 has a depth 1₂ to the radially inner face of the tongue 10, and to the inner face 6 of the extruded profile body 2 a depth 1₃, 1₃being greater than 1₂. The tongue 10 and the ratchet recess 13 are formed on the front end 3 of the extruded profile body 2. In the case of the example shown in Fig. 2, the tongue 10 forms a portion of the ratchet recess 13.

Opposite the front end 3, on the front end 4, the extruded profile body 2 has the groove 11 and the ratchet element 12.

The groove 11 is constructed substantially complementary to the tongue 10 in the embodiment in Fig. 3 and has a counter retaining surface 23' located radially externally with substantially the same circular contour as the tongue 10. The depth 1₁₁ of the groove 11 in the longitudinal direction is substantially the same as the length 1₁ of the tongue 10. The groove 11 is located at a distance a₂, which is substantially the same as a₁, from the radially outer external surface 5. On the inside radially, the groove 11 is bordered by a counter retaining surface 23 on a shoulder 14 protruding in a longitudinal direction. The shoulder 14 is connected to the ratchet element 12. The radial thickness 1₄ of the shoulder 14 is thinner than the radial thickness 1₅ of the extruded profile body 2 and than the radial thickness 1₆ of the tongue 10. The shoulder 14 forms the region of the whole extruded profile body with the smallest radial thickness 1₄. An opening in the groove has a radial length 1₇, which is substantially the same as a radial length 1₆ of the tongue.

The ratchet element 12 at the end of the shoulder 14 is substantially rectangular in Fig. 3 with a radial thickness 1₁₃, which is substantially the same as the depth 1₃ of the ratchet recess 13. Opposite the shoulder 14 the ratchet element 12 protrudes radially outwards by a length 1₁₂, which is substantially the same as the depth 1₂ of the ratchet recess 13. The width b₁ of the ratchet element 12 in the longitudinal direction L is smaller than the width b₂ of the ratchet recess 13. Both the ratchet element 12 and the shoulder 14 run radially flush with the interior in the longitudinal direction L.

When the extruded profile body 2 is wound up as the support coil 1 according to the invention, the tongue 10 and the groove 11 form a tongue and groove arrangement 10, 11, just as the ratchet element 12 and the ratchet recess 13 form a ratchet arrangement 12, 13, which are engaged with each other, as shown in Fig. 2.

The tongue 10 is located in the groove 11, so that the front ends 3, 4 of the extruded profile body 2 are locked together in a radial direction. This locking is achieved through the substantially positive connection of the tongue 10 with the groove 11.

Because the ratchet element 12, which is formed radially inwards out of the extruded profile body 2, engages in the ratchet recess 13 radially outwards, and a retaining surface 15 of the ratchet element 12 rests on a counter retaining surface 16 of the ratchet recess 13, the front ends 3, 4 of the extruded profile body 2 are locked in a longitudinal direction L, preventing separation by traction Z. The retaining surface 15 and the counter retaining surface 16 are both aligned substantially perpendicular to the longitudinal direction L. Because the width b₁ and the cross sectional surface of the ratchet element 12 are smaller than the width b₂ and the cross sectional surface of the ratchet recess 13, the ratchet recess 13 has a passing region 17, which is not filled by a ratchet element 12.

In Fig. 2 a position 2' of the extruded profile body 2 is shown during the separation of two turns 33 of the support coil 1 according to the example, where the front ends 3, 4 of the extruded profile body 2 are being released by the removal of the free unwound extruded profile body 2. The extruded profile body 2 is rotated on the outer turn 33 of the support coil 1 in a dismantling direction LR radially inwards by pulling e.g. on the free end 9. This rotation of the extruded profile body 2 takes place substantially about an instant centre M, the pivot point. During this movement the front ends 3, 4, which were previously connected to each other, and are located on the radially outer face, distance themselves from each other and a gap 34, which tapers radially inwards opens up. On the radially inner face of the support coil 1 the ratchet element 12 is pressed into the passing region 17 away from the counter retaining surface 16 by the rotational movement LR. Because the radially outer contour of the tongue and groove arrangement 10, 11 runs about the pivot point M, the tongue 10 moves out of the groove 11 easily. The counter retaining surface 23' slides on the retaining surface 22'.

Furthermore, the ratchet element 12 is pressed radially outwards against the ratchet recess 13 in the dismantling direction LR when the extruded profile body 2 is rotated, so that the shoulder 14, which has the greatest deflectability on the extruded profile body 2 due to its smallest thickness 1₄, is resiliently bent. In the case of the embodiment in Fig. 2 the shoulder 14 forms a weakening region 30 of the extruded profile body 2, in which the extruded profile body can be resiliently deformed. Because only the force for the resilient bending of the weakening region 30 and the frictional forces in the tongue and groove arrangement 10, 11 have to be applied in order to dismantle the extruded profile body 2', the releasing force FZ is easy to apply manually.

The support coil 1 according to the example can be used in a tubing arrangement 7 as shown by way of example in Fig. 4. In the tubing arrangement 7 according to the example, a resiliently expanded tubing material 8, such as an insulating tube or socket, for example, is kept in its radially expanded state by the support coil 1 according to the invention. The tubing material 8 is manufactured, for example, from a resilient electrically insulating material, for example silicone, and is used for the electrical insulation of electrical components. The tubing material 8 should enclose the component to be insulated securely. In order to be able to position the tubing material easily around the components to be insulated, it is kept in its expanded state by the support coil 1 according to the invention. When the insulating tubing arrangement 7 is arranged over the component to be insulated, the support coil 1 can be dismantled by pulling the free end 9 of the extruded profile body 2 with traction F_{z} and pulled out of the tubing arrangement 7 in a longitudinal direction L. As soon as the support coil 1 is removed, the expanded insulating tube 8 relaxes and contracts, as shown schematically on the right of Fig. 4.

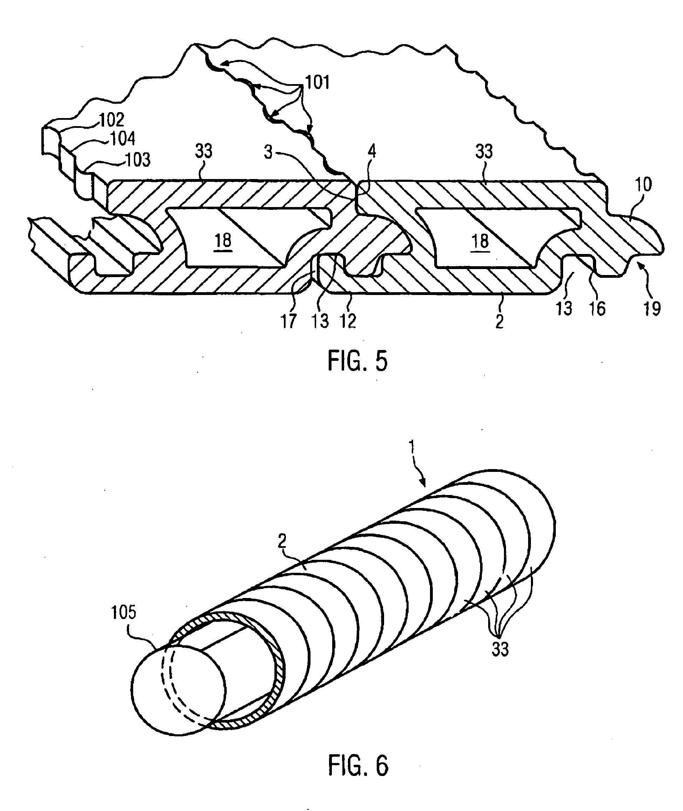

Figure 5 shows a sectional view of an example very similar to the example shown in Fig. 1. Identical elements are given the same reference numerals. The outer surfaces of the individual turns 33 are shown at least partially, as well as the sectional surfaces of the respective extruded profile body 2.

The radially outer part of the front ends 3, 4 of the two extruded profile bodies 2 is provided with a friction-increasing irregularity in the form of flute-like shapes 101. There are corresponding flute troughs 102 and flute peaks 103 on opposite front ends 3, 4. Between the flute troughs 102 and the flute peaks 103 of a front end 3, 4 there is a plateau 104, which extends in an axial direction of the support coil.

The profiling 102 to 104 is provided over the whole circumferential surface between the two front ends 3, 4.

When the support coil is dismantled by the removal of the individual coils, i.e. turns 33 of the extruded profile body, through the support coil, the front coil 2 in unwinding direction is first bent radially inwards so that the front ends 2, 3 come apart, particularly in the region of the profiling 101. This dismantling movement is enhanced by the particular arrangement of the ratchet arrangement 12, 13 on one hand and the tongue and groove arrangement 10, 11 on the other - as described above.

In the case of the embodiments shown in Figures 6 to 8, different supporting bodies are provided. In the case of the embodiment shown in Figure 6, a tubular adhesive film 105, which is first shown in the figure in unexpanded state, is inserted into the support coil. This tubular adhesive film 105 can be expanded radially outwards by an internal pressure for example and rested on the inner circumferential surface of the support coil 1. The supporting body 105 extends over the whole axial length of the coil 1 and bridges all of the turns 33. By laying the film 105 on the inner circumferential surface these turns 33 are prevented from moving relative to each other. The turns of the wound extruded profile body 2 retain their original diameter.

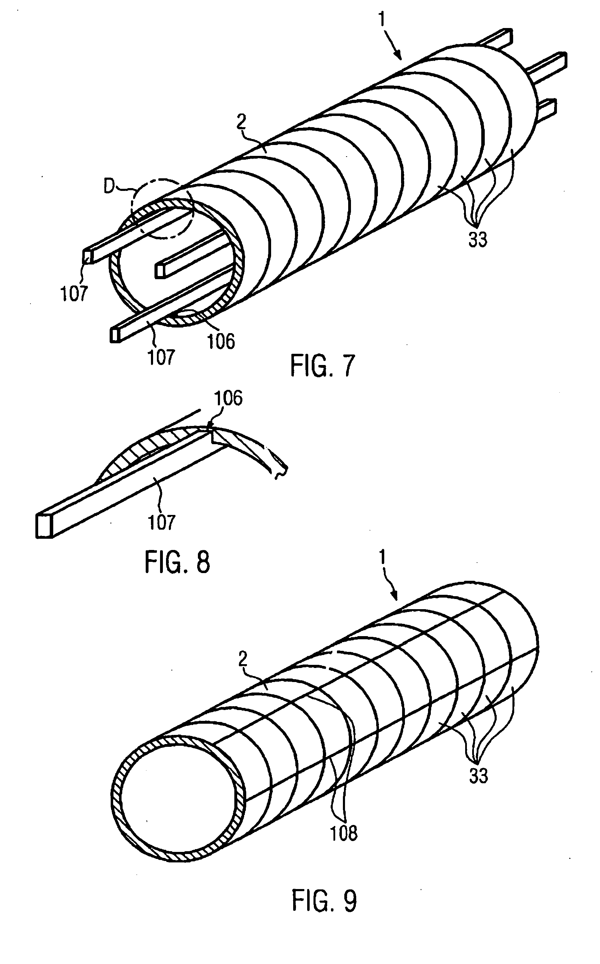

Figures 7 and 8 show another embodiment, in which three grooves 106 are recessed in the inner circumferential surface of the support coil 1 in the circumferential direction. The grooves 106 extend in an axial direction related to the support coil 1 and run through the support coil 1. Rectangular rods 107 are inserted into the grooves 106 respectively as supporting bodies. These rectangular rods 107 go through the whole support coil 1 and protrude beyond it at both ends The profile rods 107 can accordingly be gripped at both of their protruding ends and be expelled from the grooves 106 in order to remove the positive securing of the diameter of the support coil 1.

As can be seen particularly in Figure 8, the contour of the profile rod 107 is adapted to the contour of the groove 106, so that the rod is retained in the groove 106 by being clamped. The profile rod 107 can, of course, be welded, glued or secured in other possible ways in the groove.

The supporting body in the embodiment shown in Figure 9 is formed by welded webs 108 attached in a longitudinal direction. These welded webs 108 are welded onto the plastics material of the support coil 1. The adjacent turns 33 of the wound extruded profile body 2 of the support coil 1 are also secured relative to each other by overlay welding 108.

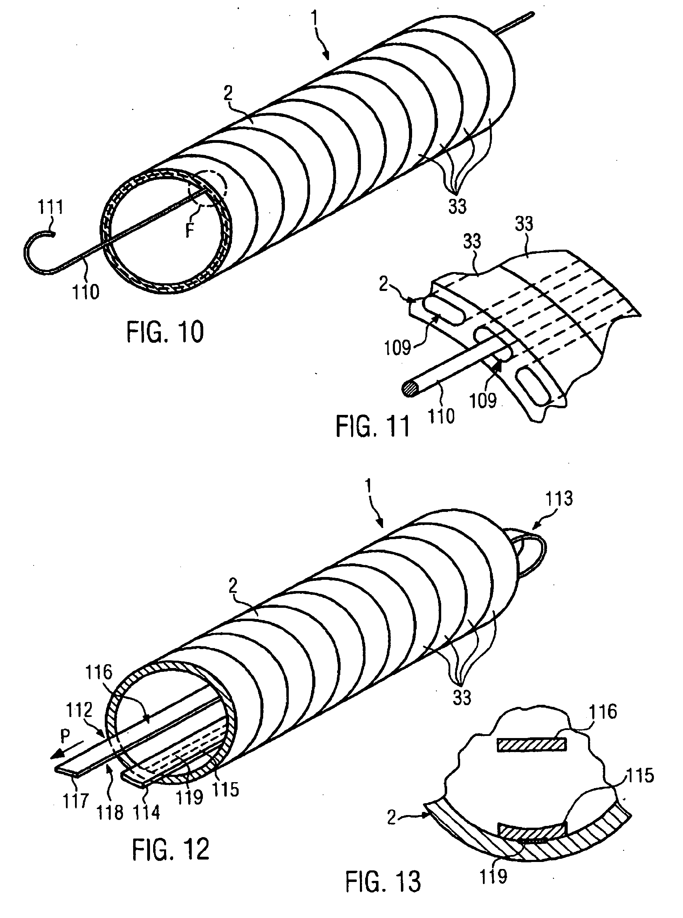

Figures 10 and 11 show another embodiment, in which the individual turns 33 of the support coil 1 are interspersed with recessed openings 109. The recessed openings 109 of all the turns 33 are formed in an axial direction in relation to recesses extending the support coil 1. In the embodiment shown, the support coil 1 has a large number of recesses distributed on the circumference, which open towards the front face of the support coil 1. In the case of the embodiment shown, a rod 110 has been inserted into one of the recesses, which has an eyelet 111 formed at one end by being bent round, which makes gripping the rod 110 easier for pulling it out of the support coil 1. The other end of the rod 110 is straight. It can, however, be bent round to secure the extruded profile body 2 during transportation and oriented by bending substantially coaxially to the part of the rod 110, which is in the recess before the removal of the rod 110, so that it can be pulled out of the recess. It is also possible to configure the rod slightly fluted, at least in the region of the recess, so that it rests resiliently on the walls of the recessed opening 109 and held in place inside the extruded profile bodies 2 so it cannot be lost, but can still be manually removed.

In the case of the alternative embodiment according to Figures 12 and 13, a supporting body is provided in the form of a band 112, which is arranged inside the hollow support coil 1 and is laid as a loop 113. One end of the band 112 projects from the front face end of the support coil 1 as an end 114 on the attachment side. From there, the band 112 goes through the support coil 1 with its attachment portion 115 and comes out at the opposite end of the coil. To form the loop 113, the band 112 is bent round at this end through 180° and fed through the support coil 1 in the other direction to the attachment portion 115. A free end 117 of the band 112 protrudes from the end 114 on the attachment side and forms a handling portion 118, which projects beyond the front face end of the support coil 1.

The attachment portion 115 of the band 112 is connected to the inner circumferential surface of the support coil 1 by a welded or glued connection. This material-uniting or non-positive connection is indicated by the reference numeral 119 in Fig. 13. The connection 119 is formed such that the band 112 can be freed from the support coil 1 in the direction of the arrow P away from the support coil 1 by manual gripping and pulling on the handling portion 118 and pulled out of it. During this process, the loop 113 travels through the support coil. The traction applied behind the loop leads to a dissolution of the connection 119. Afterwards, the rotation prevention means provided by the band 112 is removed.

The band 112 can be made from a textile for example, or from a plastics material. The configuration with plastics material offers the advantage that the band 112 can be welded to an extruded profile body 2, which is also made from plastics material.

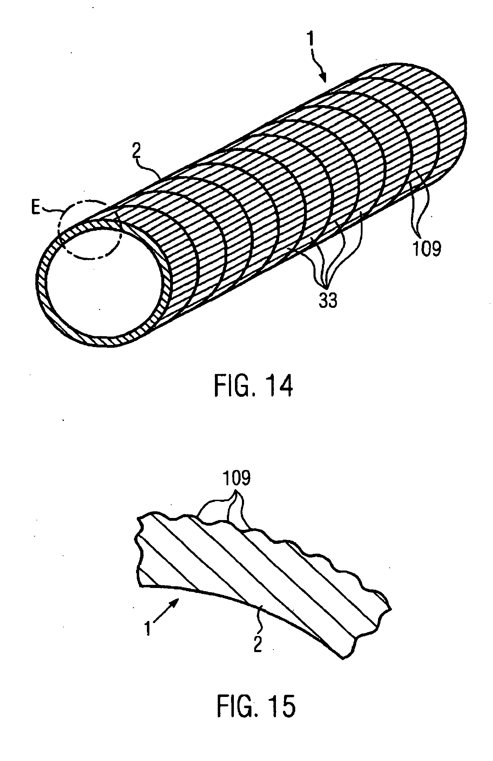

In the case of the embodiment shown in Figure 14, irregularities in the form of flutes 109 are again provided on the outer circumferential surface of the wound extruded profile body 2. As Figure 19 shows, the flutes do not pass through in an axial direction. Rather, adjacent flutes 109 are usually non-forcibly offset when the individual turns 33 are coiled up. The flutes 109 are formed relatively softly in the embodiment shown (cf. Fig. 15). The resiliently expanded tubing material is laid onto this contouring on the outer circumference of the support coil 1 in a stressed state, and usually shapes itself plastically locally according to the contours of the flutes 109 and therefore also secures the adjacent turns 33 against each other positively.

### Reference numerals

- 1: Support coil
- 2: Extruded profile body
- 3: Front end
- 4: Front end
- 5: Outer surface
- 6: Inner surface
- 7: Tubing arrangement
- 8: Tubing material
- 9: End
- 10: Tongue
- 11: Groove
- 12: Ratchet element
- 13: Ratchet recess
- 14: Shoulder
- 15: Retaining surface
- 16: Counter retaining surface
- 17: Passing region
- 18: Hollow spaces
- 19: Step
- 19': Diagonal
- 20: Counter step
- 21: Another passing region
- 22: Inner retaining surface
- 22': Outer retaining surface
- 23: Inner counter retaining surface
- 23': Outer counter retaining surface
- 24: Gap
- 25: Chamfer
- 27: Locking lug
- 28: Counter lock
- 29: Slot
- 30: Weakening region
- 30': Another weakening region
- 31: Slot
- 32: Retaining shoulder
- 33: Turn/coil section
- 34: Gap
- 35: Stop
- 36: Stop surface
- 101: Flute-like formation
- 102: Trough of the flute
- 103: Peak of the flute
- 104: Plateau
- 105: Adhesive film
- 106: Groove machined on inner circumference of support coil
- 107: Rectangular rod
- 108: Welded web
- 109: Recessed opening
- 110: Rod
- 111: Eyelet
- 112: Band
- 113: Loop
- 114: End on the attachment side
- 115: Attachment portion
- 116: Free portion
- 117: Free end
- 118: Handling portion
- 119: Connection
- D: Pressing force
- M: Instant centre
- L: Longitudinal direction
- LR: Direction of dismantling
- R: Radius
- Z: Traction
- P: Arrow showing direction of removal

## Claims

1. Support coil (1) for radial support of resiliently expanded tubing material (8), made from at least one extruded profile body (2) wound into a plurality of turns (33), the end faces (3, 4) of the extruded profile body being connected to each other at least in portions in the longitudinal direction (L) of the support coil (1) and interlocked by a ratchet arrangement (12, 13) in the longitudinal direction (L) and by a tongue and groove arrangement (10, 11) in a radial direction,
**characterised by**
a supporting body provided as a separate part, which extends along at least adjacent turns (33), and which is removably connected to the inner and/or outer circumferential surface of the wound extruded profile body (2), through which adjacent turns (33) are held secure against rotation,
wherein at least one supporting body (105, 107, 108) extends along at least two adjacent turns (33) and is fixed to the circumferential surface of the wound extruded profile body (2).

2. Support coil (1) according to claim 1, **characterised in that** adjacent turns (33) are held together securely against rotation in a positive manner.

3. Support coil (1) according to either claim 1 or claim 2, **characterised in that** the end faces (3, 4) of the neighbouring turns (33) and/or an outer circumferential surface of the wound extruded profile body (2), which is attachable to the tubing material, are provided with friction-increasing irregularities (101, 102, 103, 104; 109).

4. Support coil (1) according to claim 3, **characterised in that** the irregularities (101, 102, 103, 104) formed on the end faces (3, 4) are provided radially outside the tongue and groove arrangement (10, 11).

5. Support coil (1) according to either claim 3 or claim 4, **characterised in that** adjacent end faces (3, 4) have corresponding irregularities (102, 103, 104).

6. Support coil (1) according to any one of claims 3 to 5, **characterised in that** the irregularities (101, 102, 103, 104; 109) are arranged on the circumference, distributed at least in portions.

7. Support coil (1) according to any one of claims 2 to 6, **characterised in that** projections (109) are provided on the outer circumferential surface of the wound extruded profile body (2), extending substantially in an axial direction hereof.

8. Support coil (1) according to claim 7, **characterised in that** the outer circumferential surface of the wound extruded profile body (2) has a fluted contoured effect.

9. Support coil (1) according to claim 1, **characterised in that** the supporting body (105, 107, 108) is formed by a rod element (107) extending substantially in an axial direction and bridging at least two adjacent turns (33), and which is connected to the inner circumferential surface of the wound profile member (2).

10. Support coil (1) according to claim 9, **characterised in that** the rod element is formed by a profile rod (107), which is inserted into a groove (106), which corresponds to it on the inner circumferential surface of the wound extruded profile body (2) and extends substantially in an axial direction thereof.

11. Support coil (1) according to claim 1, **characterised in that** the supporting body is formed by a metallic wire, which is kept in a recess formed during insertion of the hot wire in a plastics material of the wound extruded profile body (2) by melting and setting.

12. Support coil (1) according to either claim 9 or claim 10, **characterised in that** the rod element has a cut edge, which is cut into the material that forms the wound extruded profile body (2).

13. Support coil (1) according to claim 1, **characterised in that** the supporting body comprises a band (112), which is laid in the form of a loop (113) and arranged inside the support coil (1) and which is constructed with one portion (115), which is removably connected to the inner circumferential surface of the extruded profile body (2) and one portion (116), which extends out of the support coil (1).

14. Support coil (1) according to claim 13, **characterised in that** the two ends (114, 117) of the band (112) are provided on the same front face end of the extruded profile body (2).

15. Support coil (1) according to either claim 13 or claim 14, **characterised in that** the band (112) has a portion (116) that is substantially freely guided in the extruded profile body (2), and the end of which (117) extends out of the extruded profile body (2) to form a handling portion (118).

16. Support coil (1) according to claim 1, **characterised in that** the supporting body (108) is fitted onto the circumferential surface of the wound extruded profile body (2) by overlay welding.

17. Support coil (1) according to claim 1, **characterised in that** the supporting body comprises an adhesive film (105).

18. Support coil (1) according to claim 17, **characterised in that** the adhesive film (105) is at any rate bonded around part of the inner circumferential surface of the wound extruded profile body (2).

19. Support coil (1) according to either claim 17 or claim 18, **characterised in that** the adhesive film (105) is provided with a tear-off tag.

20. Support coil (1) according to claim 1, **characterised in that** neighbouring turns are soldered or bonded together.

## Patentansprüche

1. Stützwendel (1) für das radiale Stützen von elastisch expandiertem Schlauchmaterial (8), hergestellt aus mindestens einem extrudierten Profilkörper (2), der zu einer Vielzahl von Windungen (33) gewickelt ist, wobei die Endflächen (3, 4) des extrudierten Profilkörpers miteinander mindestens in Abschnitten in der Längsrichtung (L) der Stützwendel (1) verbunden und mittels einer Ratschenanordnung (12, 13) in der Längsrichtung (L) und mittels einer Feder- und Nutanordnung (10, 11) in einer radialen Richtung verriegelt sind,
**gekennzeichnet durch**
einen Stützkörper, der als ein separates Teil bereitgestellt wird, der sich längs mindestens benachbarter Windungen (33) erstreckt, und der entfernbar mit der inneren und/oder äußeren Umfangstläche des gewundenen extrudierten Profilkörpers (2) verbunden ist, mittels dessen benachbarte Windungen (33) gegen eine Drehung sicher gehalten werden,
wobei sich mindestens ein Stützkörper (105, 107, 108) längs mindestens von zwei benachbarten Windungen (33) erstreckt und an der Umfangsfläche des gewundenen extrudierten Profilkörpers (2) befestigt ist.

2. Stützwendel (1) nach Anspruch 1, **dadurch gekennzeichnet, dass** benachbarte Windungen (33) gegen eine Drehung in einer zwangläutigen Weise sicher zusammengehalten werden.

3. Stützwendel (1) nach entweder Anspruch 1 oder Anspruch 2, **dadurch gekennzeichnet, dass** die Endflächen (3, 4) der benachbarten Windungen (33) und/oder eine äußere Umfangsfläche des gewundenen extrudierten Profilkörpers (2), der am Schlauchmaterial befestigt werden kann, mit reibungssteigernden Unregelmäßigkeiten (101, 102, 103, 104; 109) versehen sind.

4. Stützwendel (1) nach Anspruch 3, **dadurch gekennzeichnet, dass** die Unregelmäßigkeiten (101, 102, 103, 104), die auf den Endflächen (3, 4) ausgebildet sind, radial außerhalb der Feder- und Nutanordnung (10, 11) vorhanden sind.

5. Stützwendel (1) nach entweder Anspruch 3 oder Anspruch 4, **dadurch gekennzeichnet, dass** die benachbarten Endflächen (3, 4) entsprechende Unregelmäßigkeiten (102, 103, 104) aufweisen.

6. Stützwendel (1) nach einem der Ansprüche 3 bis 5, **dadurch gekennzeichnet, dass** die Unregelmäßigkeiten (101, 102, 103, 104; 109) auf dem Umfang angeordnet sind, mindestens in Abschnitten verteilt.

7. Stützwendel (1) nach einem der Ansprüche 2 bis 6, **dadurch gekennzeichnet, dass** Vorsprünge (109) auf der äußeren Umfangsfläche des gewundenen extrudierten Profilkörpers (2) vorhanden sind, die sich im Wesentlichen in einer axialen Richtung davon erstrecken.

8. Stützwendel (1) nach Anspruch 7 **dadurch gekennzeichnet, dass** die äußere Umfangsfläche des gewundenen extrudierten Profilkörpers (2) einen geriffelten Formeftekt aufweist.

9. Stützwendel (1) nach Anspruch 1, **dadurch gekennzeichnet, dass** der Stützkörper (105, 107, 108) durch ein Stabelement (107) gebildet wird, das sich im Wesentlichen in einer axialen Richtung erstreckt und mindestens zwei benachbarte Windungen (33) überbrückt, und der mit der inneren Umfangstläche des gewundenen Profilelementes (2) verbunden ist.

10. Stützwendel (1) nach Anspruch 9, **dadurch gekennzeichnet, dass** das Stabelement durch einen Profilstab (107) gebildet wird, der in eine Nut (106) eingesetzt wird, die ihm auf der inneren Umfangstläche des gewundenen extrudierten Profilkörpers (2) entspricht und sich im Wesentlichen in einer axialen Richtung davon erstreckt.

11. Stützwendel (1) nach Anspruch 1, **dadurch gekennzeichnet, dass** der Stützkörper durch einen Metalldraht gebildet wird, der in einer Vertiefung gehalten wird, die während des Einsetzens des heißen Drahtes in ein Kunststoffmaterial des gewundenen extrudierten Profilkörpers (2) durch Schmelzen und Aushärten gebildet wird.

12. Stützwendel (1) nach entweder Anspruch 9 oder Anspruch 10, **dadurch gekennzeichnet, dass** das Stabelement eine Schnittkante aufweist, die in das Material geschnitten ist, das den gewickelten extrudierten Profilkörper (2) bildet.

13. Stützwendel (1) nach Anspruch 1, **dadurch gekennzeichnet, dass** der Stützkörper ein Band (112) aufweist, das in der Form einer Schleife (113) gelegt und innerhalb der Stützwendel (1) angeordnet ist, und das mit einem Abschnitt (115), der entfernbar mit der inneren Umtangsfläche des extrudierten Profilkörpers (2) verbunden ist, und einem Abschnitt (116) konstruiert ist, der sich aus der Stützwendel (1) heraus erstreckt.

14. Stützwendel (1) nach Anspruch 13, **dadurch gekennzeichnet, dass** die zwei Enden (114, 117) des Bandes (112) am gleichen Vorderseitenende des extrudierten Profilkörpers (2) vorhanden sind.

15. Stützwendel (1) nach entweder Anspruch 13 oder Anspruch 14, **dadurch gekennzeichnet, dass** das Band (112) einen Abschnitt (116) aufweist, der im Wesentlichen im extrudierten Profilkörper (2) frei geführt wird, und dessen Ende (117) sich nach außerhalb des extrudierten Profilkörpers (2) erstreckt, um einen Handhabungsabschnitt (118) zu bilden.

16. Stützwendel (1) nach Anspruch 1, **dadurch gekennzeichnet, dass** der Stützkörper (108) auf der Umfangstläche des gewundenen extrudierten Profilkörpers (2) mittels Auftragschweißens aufgebracht wird.

17. Stützwendel (1) nach Anspruch 1, **dadurch gekennzeichnet, dass** der Stützkörper eine Klebefolie (105) aufweist.

18. Stützwendel (1) nach Anspruch 17, **dadurch gekennzeichnet, dass** die Klebefolie (105) um einen Teil der inneren Umfangstläche des gewundenen extrudierten Profilkörpers (2) auf jeden Fall geklebt wird.

19. Stützwendel (1) nach entweder Anspruch 17 oder Anspruch 18, **dadurch gekennzeichnet, dass** die Klebefolie (105) mit einer Abreißlasche versehen ist.

20. Stützwendel (1) nach Anspruch 1, **dadurch gekennzeichnet, dass** benachbarte Windungen miteinander verlötet oder verklebt sind.

## Revendications

1. Bobine de support (1) pour assurer le support radial de matériau de tube à dilatation élastique (8), comprenant au moins un corps profilé extrudé (2) enroulé en plusieurs spires (33), les faces d'extrémité (3, 4) du corps profilé extrudé étant connectées l'une à l'autre, au moins dans des parties dans la direction longitudinale (L) de la bobine de support (1), et mutuellement verrouillées par un assemblage de cliquet (12, 13) dans la direction longitudinale (L) et par un assemblage à languette et rainure (10, 11) dans la direction radiale ;
**caractérisée par** :
un corps de support constituant une pièce séparée, s'étendant le long d'au moins les spires adjacentes (33), et connecté de manière amovible à la surface circonférentielle interne et/ou externe du corps profilé extrudé enroulé (2), par le biais duquel les spires adjacentes (33) sont retenues fermement contre une rotation ;
au moins un corps de support (105, 107, 108), s'étendant au moins sur deux spires adjacentes (33), et fixé sur la surface circonférentielle du corps profilé extrudé enroulé (2).

2. Bobine de support (1) selon la revendication 1, **caractérisée en ce que** les spires adjacentes (33) sont retenues fermement contre une rotation, d'une manière positive.

3. Bobine de support (1) selon les revendications 1 ou 2, **caractérisée en ce que** les faces d'extrémité (3, 4) des spires avoisinantes (33) et/ou une surface circonférentielle externe du corps profilé extrudé enroulé (2), pouvant être fixé sur le matériau de tube, comportent des irrégularités accroissant le frottement (101, 102, 103, 104 ; 109).

4. Bobine de support (1) selon la revendication 3, **caractérisée en ce que** les irrégularités (101, 102, 103, 104) formées sur les faces d'extrémité (3, 4) sont formées radialement vers l'extérieur de l'assemblage à languette et rainure (10, 11).

5. Bobine de support (1) selon les revendications 3 ou 4, **caractérisée en ce que** les faces d'extrémité adjacentes (3, 4) comportent des irrégularités correspondantes (102, 103, 104).

6. Bobine de support (1) selon l'une quelconque des revendications 3 à 5, **caractérisée en ce que** les irrégularités (101, 102, 103, 104 ; 109) sont formées sur la circonférence et sont réparties au moins en parties.

7. Bobine de support (1) selon l'une quelconque des revendications 2 à 6, **caractérisée en ce que** des saillies (109) sont formées sur la surface circonférentielle externe du corps profilé extrudé enroulé (2), s'étendant pratiquement dans la direction axiale de celui-ci.

8. Bobine de support (1) selon la revendication 7, **caractérisée en ce que** la surface circonférentielle externe du corps profilé extrudé enroulé (2) présente un effet profilé cannelé.

9. Bobine de support (1) selon la revendication 1, **caractérisée en ce que** le corps de support (105, 107, 108) est formé par un élément de tige (107) s'étendant pratiquement dans une direction axiale et reliant au moins deux spires adjacentes (33), et connecté à la surface circonférentielle interne de l'élément profilé enroulé (2).

10. Bobine de support (1) selon la revendication 9, **caractérisée en ce que** l'élément de tige est formé par une tige profilée (107), insérée dans une rainure (106) qui y correspond sur la surface circonférentielle interne du corps profilé extrudé enroulé (2), et s'étend pratiquement dans une direction axiale de celui-ci.

11. Bobine de support (1) selon la revendication 1, **caractérisée en ce que** le corps de support est formé par un fil métallique, retenu dans un évidement formé au cours de l'insertion du fil chaud dans un matériau plastique du corps profilé extrudé enroulé ((2) par fusion et durcissement.

12. Bobine de support (1) selon les revendications 9 ou 19, **caractérisée en ce que** l'élément de tige comporte une arête de coupe, coupée dans le matériau formant le corps profilé extrudé enroulé (2).

13. Bobine de support (1) selon la revendication 1, **caractérisée en ce que** le corps de support comprend une bande (112), posée sous forme d'une boucle (113) et agencée à l'intérieur de la bobine de support (1), et comportant une partie (115) connectée de manière amovible à la surface circonférentielle interne du corps profilé extrudé enroulé (2), et une partie (116) s'étendant hors de la bobine de support ((1).

14. Bobine de support (1) selon la revendication 13, **caractérisée en ce que** les deux extrémités (114, 117) de la bande (112) sont agencées sur la même extrémité de face avant du corps profilé extrudé (2).

15. Bobine de support (1) selon les revendications 13 ou 14, **caractérisée en ce que** la bande (112) comporte une partie (116) qui est guidée de manière pratiquement libre dans le corps profilé extrudé (2), son extrémité (117) s'étendant hors du corps profilé extrudé (2) pour former une partie de manipulation.

16. Bobine de support (1) selon la revendication 1, **caractérisée en ce que** le corps de support (108) est ajusté sur la surface circonférentielle du corps profilé extrudé enroulé (2) par soudure par recouvrement.

17. Bobine de support (1) selon la revendication 1, **caractérisée en ce que** le corps de support comprend un film adhésif (105).

18. Bobine de support (1) selon la revendication 17, **caractérisée en ce que** le film adhésif (105) est dans tous les cas collé autour d'une partie de la surface circonférentielle interne du corps profilé extrudé enroulé.

19. Bobine de support (1) selon les revendications 17 ou 18, **caractérisée en ce que** le film adhésif (105) comporte une étiquette détachable.

20. Bobine de support (1) selon la revendication 1, **caractérisée en ce que** les spires avoisinantes sont reliées par soudage ou collage.
